# FASCICULE DE BREVET EUROPEEN

(11) **EP 1 783 105 B1**
(45) Date de publication et mention de la délivrance du brevet: **27.07.2011**
(21) Numéro de dépôt: 05110367.9
(22) Date de dépôt: 04.11.2005
(51) Int. Cl.: C04B 26/02, C04B 28/02, C09K 3/22, C04B 24/08, C04B 24/26, C04B 24/36

(54) **Composition de mortier, son procédé de préparation et son utilisation**
Mörtelzusammensetzung, Verfahren zu ihrer Herstellung und ihre Verwendung
Mortar composition, process for the production and use thereof

(43) Date de publication de la demande: 09.05.2007
(73) Titulaire: S.A. LHOIST RECHERCHE ET DEVELOPPEMENT, 1342 Ottignies-Louvain-La-Neuve (BE)
(72) Inventeur: Daviller, Daniel M., 25870 Chatillon-le-duc (FR); Laudet, Alain M., 5000 Namur (BE)
(74) Mandataire: Claeys, Pierre

(56) Documents cités:
- WO-A-00/34200
- WO-A1-98/23705
- WO-A2-2006/084588
- FR-A- 2 349 550
- GB-A- 370 878
- GB-A- 892 015
- GB-A- 1 075 459
- GB-A- 1 227 355
- JP-A- 5 140 543
- JP-A- 6 158 047
- JP-A- 6 219 804
- JP-A- 6 279 080
- JP-A- 7 206 504
- JP-A- 8 073 252
- US-A- 3 656 979
- US-A1- 2005 092 491

## Description

La présente invention est relative à des mortiers industriels et à des enduits secs, ainsi qu'à leurs procédés de préparation et à leurs utilisations.

On connaît depuis longtemps des compositions de mortier sous forme de poudre sèche, prêtes à l'emploi, comprenant au moins un liant pulvérulent et au moins un granulat, ainsi qu'éventuellement au moins un additif et/ou adjuvant courant, et formées de particules dont au moins une partie, appelée particules fines, est susceptible de produire une émission de poussières. Ce type de composition appelé généralement mortier "industriel" est un mortier dosé et mélangé en usine. II est "sec", c'est-à-dire prêt à être gâché avec de l'eau.

Parmi les liants précités, on peut citer des liants minéraux, tels que la chaux éteinte, les ciments, le plâtre ou analogues, et des liants organiques, comme par exemple certaines résines synthétiques. Comme granulats (appelé parfois agrégats), on peut citer le sable, la poudre de pierre, la brique pilée, ou analogues.

Par l'expression mortier, il faut entendre toutes les compositions répondant aux particularités données ci-dessus et donc également les enduits. On appelle "couche d'enduit" une couche appliquée en une ou plusieurs passes utilisant le même mortier, sans laisser sécher la première passe avant d'appliquer la deuxième. On distingue alors le "sous-enduit" ou encore enduit de sous-couche, à savoir le(s) "couche(s) inférieure(s) d'un système", de la "couche finale" ou enduit de façade ou enduit de finition, à savoir la "couche supérieure d'un système d'enduisage multicouche".

Les mortiers industriels et enduits prêts secs précités présentent l'inconvénient bien connu de longue date d'une émission de poussières importante tant lors de leur fabrication par mélange de leurs éléments constitutifs que lors de leur ensachage et lors de leur manipulation avant le gâchage sur le site d'utilisation.

Cette émission de poussières fait l'objet d'une réglementation sur la protection des travailleurs qui évolue dans le sens d'un renforcement croissant.

Par ailleurs, l'émission de poussières précitée entraîne une dégradation de l'environnement local, en usine et sur site, nécessitant des travaux de nettoyage ou de protection particulièrement contraignants. Le problème de l'émission de poussières est particulièrement critique lors des travaux en habitat fermé, notamment lors des rénovations d'intérieurs habités.

Enfin, l'émission de poussières va concerner majoritairement les fractions présentant les particules les plus fines des mortiers et enduits, qui sont souvent les adjuvants faiblement dosés. Ces constituants sont en général les plus critiques et les plus coûteux de la formulation; leur envolement partiel en usine et/ou sur site peut conduire à un déséquilibre dans la composition de mortier et donc à une perte de ses performances.

Dans un tout autre domaine, il est connu de réduire l'émission de poussières émises lors du traitement de sols à la chaux vive, par agglomération des fines de chaux au moyen d'un additif fluide non aqueux [EP0880569B2].

Un effet semblable dans des compositions de fibro-ciment a été signalé également dans le brevet GB-1227355.

L'addition, dans les mortiers et enduits, de liquides organiques polaires, en particulier de polyoléfines fonctionnalisées présentant par exemple des fonctions carboxyliques ou toute autre fonction équivalente (alcoolique ou phénolique), est connue afin d'améliorer l'adhérence et l'ouvrabilité des compositions, dans le but de limiter l'addition d'eau lors du gâchage (réduction du rapport eau/liant) [JP08081249, JP05058695, US4586960]. Il faut toutefois noter qu'en aucun cas de tels composés polaires n'ont été réputés réduire l'émission de poussières des compositions auxquelles ils ont été ajoutés.

Par "ouvrabilité" il faut entendre l'ensemble des propriétés de mise en oeuvre d'un mortier qui lui confèrent son aptitude à l'emploi. Cette notion est parfois aussi appelée "oeuvrabilité" ou "maniabilité" ou encore "travaillabilité", par traduction littérale du vocable "workability".

On connaît en outre une demande de brevet représentant un état antérieur de la technique conforme à l'Article 54(3) CBE dans laquelle on décrit l'utilisation d'hydrocarbures ou de mélanges d'hydrocarbures pour réduire l'émission de poussières de produits chimiques de construction (WO 2006/084588).

La présente invention a pour objet la mise au point de compositions de mortiers industriels ou d'enduits prêts secs, qui présentent une émission réduite de poussières lors de leur fabrication, de leur manipulation ou de leur utilisation sur site. Ces compositions doivent de préférence conserver les caractéristiques physico-chimiques des mortiers et enduits par rapport aux prescriptions minimales exigées par les applications, y compris après une période de stockage de plusieurs mois. La présente invention a également pour objet de proposer un procédé de préparation de tels mortiers industriels ou enduits prêts secs, présentant une émission limitée de poussières. composition de mortier sous forme de poudre sèche, prête au gâchage avec de l'eau,
comprenant au moins un liant minéral pulvérulent et au moins un granulat, ainsi qu'éventuellement au moins un additif et/ou adjuvant courant, et
formée de particules dont au moins une partie, appelée particules fines, est susceptible de produire une émission de poussières,
la composition comprenant en outre un additif fluide qui est constitué d'au moins une substance organique hydrocarbonée choisie parmi les huiles minérales, les huiles paraffiniques, les paraffines, les polyoléfines ou des mélanges de ces substances, et qui présente un pouvoir d'agglomération desdites particules fines, la composition de mortier sèche comportant des agglomérats de particules fines formés par l'additif fluide,
caractérisée en ce que
a) au moins un liant minéral pulvérulent susdit est de la chaux hydratée, ledit additif fluide étant contenu en une quantité de 4g a 10g par kg de composition, ou
b) aucun liant minéral pulvérulent susdit n'est de la chaux hydratée. ledit additif fluide étant contenu en une quantité de 4 g à 10 g par kg de composition, à l'exclusion de 10g par kg d'huile minérale ou parrafinique aliphatique

Avantageusement l'additif fluide est hydrophobe.

L'homme de métier pouvait s'attendre, lors de l'addition de l'additif fluide suivant l'invention dans une composition de mortier ou d'enduit à une chute drastique des caractéristiques d'adhérence indispensables de ceux-ci, ainsi qu'à une altération des performances, comme le fluage, la perméabilité à l'eau, le taux de gâchage (rapport eau/mortier), le temps de malaxage, le temps de prise et le temps ouvert (délai maximum après application pour effectuer la finition). Pour les enduits de finition, on pouvait même s'attendre à une modification préjudiciable de couleur.

Il apparaît que l'addition d'une substance organique hydrocarbonée apolaire suivant l'invention à un mortier ou un enduit selon l'invention conduit bien à un produit présentant une réduction significative de l'émission de poussières, par rapport au mortier ou à l'enduit non traité (sans additif fluide). La comparaison du comportement poussiérant des produits traités et non traités s'obtient sur la base de l'application de la norme française NF P 94-103 de décembre 2004, concernant la "détermination du taux d'émission de poussières d'un produit pulvérulent (TEP)". Cette réduction de l'émission de poussières est conservée, y compris après un stockage de plusieurs mois.

Outre la réduction de poussières et, contre toute attente, il apparaît aussi que la composition de mortier selon l'invention ne présente aucune dégradation des caractéristiques physico-chimiques précitées en comparaison d'un produit non traité.

De surcroît, et de façon inattendue, les mortiers et enduits prêts secs selon l'invention présentent souvent une "ouvrabilité" supérieure au même produit non traité.

Les mortiers industriels et enduits prêts secs selon l'invention résolvent donc le problème lié à l'émission de poussières des produits classiques sans perte d'aucune de ses propriétés et avec même une amélioration de l'ouvrabilité.

La présente invention concerne également un procédé de préparation de composition de mortier suivant l'invention. Ce procédé peut avantageusement comprendre un mélange dudit au moins un liant minéral pulvérulent, dudit au moins un granulat ainsi qu'éventuellement dudit au moins un additif et/ou adjuvant courant et, avant ce mélange, un ajout dudit additif fluide à au moins un constituant dudit mélange. Suivant un autre mode de réalisation de l'invention, il comprend un mélange dudit au moins un liant minéral pulvérulent, dudit au moins un granulat ainsi qu'éventuellement dudit au moins un additif et/ou adjuvant courant, et, pendant le mélange, un ajout dudit additif fluide. Suivant encore un autre mode de réalisation de l'invention, il comprend un mélange dudit au moins un liant minéral pulvérulent, dudit au moins un granulat ainsi qu'éventuellement dudit au moins un additif et/ou adjuvant courant et, après le mélange, un ajout dudit additif fluide au mélange obtenu.

La présente invention est aussi relative à l'utilisation d'une composition de mortier suivant l'invention pour son gâchage avec de l'eau en vue de former un mortier, un enduit, un crépi, une chape, un mortier-colle et des produits analogues. Elle concerne aussi les mortiers, enduits, crépis, chapes, mortiers-colles, tels qu'obtenus à l'aide d'une composition de mortier suivant l'invention et/ou à l'aide d'une composition préparée selon un procédé suivant l'invention.

D'autres particularités de l'invention sont indiquées dans les revendications annexées.

L'invention va maintenant être décrite plus en détail au moyen d'exemples non limitatifs.

### Exemple 1

Un mortier-colle prêt sec (1) est préparé par mélange à sec des constituants suivants (pourcentages pondéraux) :
- 43,5 % de ciment portland normalisé CEM II B 42,5,
- 1 % de réactif pouzzolanique, sous la forme d'une roche volcanique naturelle,
- 51,6 % de sable siliceux de taille de grain inférieure à 750 µm,
- 3,5 % d'alcool polyvinylique,
- 0,4 % d'hydroxyméthylcellulose.

Par ailleurs, un mortier-colle (2) de composition identique au précédent est préparé selon l'invention par mélange à sec avec addition supplémentaire de 0,5 % d'huile minérale du type Shell Ondina 917 par rapport à la masse totale de la composition de mortier (1) (5 g d'huile/kg de mortier non traité).

Le comportement poussiérant des 2 mortiers ci-dessus est comparé sur la base de la norme NF P 94-103 de décembre 2004, concernant la "détermination du taux d'émission de poussières d'un produit pulvérulent (TEP)", dans des conditions opératoires légèrement différentes de la norme, afin de mieux discriminer l'émission de poussières des mortiers. La dépression renseignée au § 6.2 est de 2,59 hPa au lieu de 5,52 hPa et la durée d'aspiration est de 3 min au lieu de 4 min.

Avec ces conditions opératoires, le taux d'émission de poussières (TEP) est de 34 % pour le mortier classique (1) non traité et de 15 % seulement pour le mortier traité selon l'invention (2). Il s'agit d'une réduction significative et inattendue du comportement poussiérant du mortier selon l'invention par rapport au mortier classique, qui contient pourtant une oléfine, l'alcool polyvinylique, en quantité importante. Cette oléfine "fonctionnalisée" ne semble en effet avoir aucun effet sur l'émission de poussières de la composition de mortier.

Des échantillons des mortiers classique (1) et selon l'invention (2) sont testés afin de vérifier la conservation de leurs caractéristiques physico-chimiques. Dans les deux cas, le mortier "humide" (après gâchage) a été préparé avec un rapport eau/mortier de 0,58. La détermination l'adhérence est réalisée en conformité avec la norme française NF EN 1348. L'adhérence est de 0,6 N/mm² pour le mortier de référence (1) et de 0,7 N/mm² pour le mortier (2) selon l'invention ; il s'agit de deux valeurs considérées comme équivalentes, parfaitement conformes aux prescriptions.

L'adhérence du mortier-colle selon l'invention est bien conservée par rapport au produit non traité. De plus, une amélioration de la maniabilité a été observée par des opérateurs professionnels, lors de tests en aveugle, dans le cas du mortier-colle selon l'invention.

### Exemple 2

Un enduit de sous-couche prêt sec (3) est préparé par mélange à sec des constituants suivants (pourcentages pondéraux) :
- 23 % de ciment portland normalisé CEM Il B 42,5,
- 7 % de chaux éteinte (Ca(OH)₂),
- 68 % de sable siliceux de taille de grain inférieure à 1 mm,
- 1,5 % d'alcool polyvinylique,
- 0,2 % de surfactant,
- 0,3 % d'ester d'acide gras.

Par ailleurs, un enduit de sous-couche prêt sec (4) de composition identique au précédent est préparé selon l'invention par mélange à sec avec addition supplémentaire de 0,5 % d'huile minérale du type Shell Ondina 917 par rapport à la masse totale de la composition d'enduit (3).

Le comportement poussiérant des 2 enduits ci-dessus est comparé comme à l'exemple 1. Le taux d'émission de poussières (TEP) est de 22 % pour l'enduit classique de référence (3) non traité et de 9 % seulement pour l'enduit traité selon l'invention (4). Il s'agit d'une réduction significative du comportement poussiérant de l'enduit selon l'invention.

Des échantillons des enduits classique (3) et selon l'invention (4) sont testés comme à l'exemple 1, afin de vérifier la conservation de leurs caractéristiques physico-chimiques. Dans les deux cas, l'enduit "humide" (après gâchage) a été préparé avec un rapport eau/enduit de 0,23. La résistance à la flexion et à la compression a été déterminée selon la norme française NF EN 1015-11 et la perméance selon la norme française NF EN 1323. Les résultats des différents tests pour les 2 enduits apparaissent au tableau 1 suivant.

**Tableau 1 : comparaison des propriétés physico-chimiques des enduits de sous-couche traités selon l'invention (4) et non traités de référence (3).**

| | Enduit de référence (3) | Enduit selon l'invention (4) |
|---|---|---|
| Adhérence [N/mm²] | 0,5 | 0,5 |
| Résistance à la flexion R_{f} [Mpa] | 2,7 | 2,7 |
| Résistance à la compression R_{c} [Mpa] | 8,5 | 7,2 |

Le tableau 1 confirme que les propriétés physico-chimiques essentielles de l'enduit selon l'invention restent conformes aux prescriptions, après le traitement anti-poussières. La diminution de 8,5 à 7,2 Mpa de la résistance à la compression n'est pas significative et reste supérieure à un minimum de 5 Mpa. De plus, une amélioration de la maniabilité a été observée par des opérateurs professionnels, lors de tests en aveugle, dans le cas de l'enduit selon l'invention.

### Exemple 3

Un enduit de finition prêt sec (5) est préparé par mélange à sec des constituants suivants (pourcentages pondéraux) :
- 6 % de ciment portland normalisé CEM IIB42,5,
- 12 % de chaux éteinte (Ca(OH)₂),
- 81 % de sable siliceux de taille de grain inférieure à 2 mm,
- 0,3 % d'amidon,
- 0,3 % de surfactant,
- 0,4 % d'ester d'acide gras.

Par ailleurs, un enduit de finition prêt sec (6) de composition identique au précédent est préparé selon l'invention par mélange à sec avec addition supplémentaire de 0,7 % d'huile minérale du type Shell Ondina 917 par rapport à la masse totale de la composition d'enduit (5).

Le comportement poussiérant des 2 enduits ci-dessus est comparé comme aux exemples 1 et 2. Le taux d'émission de poussières (TEP) est de 17 % pour l'enduit classique de référence (5) non traité et de 8 % seulement pour l'enduit traité selon l'invention (6). A nouveau, il s'agit d'une réduction significative du comportement poussiérant de l'enduit selon l'invention.

Des échantillons des enduits classique (5) et selon l'invention (6) sont testés, afin de vérifier la conservation de leurs caractéristiques physico-chimiques. Dans les deux cas, l'enduit "humide" (après gâchage) a été préparé avec un rapport eau/enduit de 0,22. Un test de perméabilité à l'eau a été effectué sur les deux enduits, selon la norme française NF EN 1323.

La perméabilité à l'eau de l'enduit de référence (5) est de 0,002 ml/min.cm² et celle de l'enduit selon l'invention (6) est de 0,001 ml/min.cm². Ces deux valeurs sont pour l'homme de métier significativement différentes. L'enduit selon l'invention (6) apporte une amélioration notoire de l'imperméabilité de l'enduit. Par ailleurs, aucune différence significative de couleur n'a été observée entre les deux enduits. Enfin, une amélioration de la maniabilité a été observée par des opérateurs professionnels, lors de tests en aveugle, dans le cas de l'enduit selon l'invention.

L'ensemble de ces exemples illustre parfaitement la réduction significative d'émission de poussières des mortiers et enduits selon l'invention, par rapport aux mêmes produits non traités. Par ailleurs, ils confirment l'absence de dégradation des propriétés des mortiers et enduits selon l'invention, malgré l'ajout d'une huile minérale à leur composition. Enfin, l'amélioration de la maniabilité des mortiers et enduits selon l'invention apparaît également.

Comme autres exemples d'additifs fluides suivant l'invention, disponibles sur le marché, on peut par exemple citer une huile minérale blanche, une polyalpha-oléfine (du type de Nextbase 2002 de Neste), une poly-intra-oléfine (du type de MX2101 de Mixoil), etc.

## Revendications

1. Composition de mortier sous forme de poudre sèche, prête au gâchage avec de l'eau,
comprenant au moins un liant minéral pulvérulent et au moins un granulat, ainsi qu'éventuellement au moins un additif et/ou adjuvant courant, et
formée de particules dont au moins une partie, appelée particules fines, est susceptible de produire une émission de poussières,
la composition comprenant en outre un additif fluide qui est constitué d'au moins une substance organique hydrocarbonée apolaire choisie parmi les huiles minérales, les huiles paraffiniques, les paraffines, les polyoléfines ou des mélanges de ces substances, et qui présente un pouvoir d'agglomération desdites particules fines, la composition de mortier sèche comportant des agglomérats de particules fines formés par l'additif fluide,
**caractérisée en ce que**
a) au moins un liant minéral pulvérulent susdit est de la chaux hydratée, ledit additif fluide étant contenu en une quantité de 4g à 10g par kg de composition, ou
b) aucun liant minéral pulvérulent susdit n'est de la chaux hydratée, ledit additif fluide étant contenu en une quantité de 4 g à 10 g par kg de composition, à l'exclusion de 10g par kg d'huile minérale ou paraffine aliphatique.

2. Composition de mortier suivant la revendication 1 **caractérisée en ce que** l'additif fluide est hydrophobe.

3. Composition de mortier suivant l'une des revendications 1 et 2, **caractérisée en ce que** les liants minéraux sont choisis parmi les ciments, la chaux hydratée, le plâtre et leurs mélanges.

4. Procédé de préparation de composition de mortier suivant l'une quelconque des revendications 1 à 3,**caractérisé en ce qu'**il comprend un mélange dudit au moins un liant minéral pulvérulent, dudit au moins un granulat ainsi qu'éventuellement dudit au moins un additif et/ou adjuvant courant et, avant ce mélange, un ajout dudit additif fluide à au moins un constituant dudit mélange.

5. Procédé de préparation de composition de mortier suivant l'une quelconque des revendications 1 à 3 **caractérisé en ce qu'**il comprend un mélange dudit au moins un liant minéral pulvérulent, dudit au moins un granulat ainsi qu'éventuellement dudit au moins un additif et/ou adjuvant courant, et, pendant le mélange, un ajout dudit additif fluide.

6. Procédé de préparation de composition de mortier suivant l'une quelconque des revendications 1 à **caractérisé en ce qu'**il comprend un mélange dudit au moins un liant minéral pulvérulent, dudit au moins un granulat ainsi qu'éventuellement dudit-au moins un additif et/ou adjuvant courant et, après le mélange, un ajout dudit additif fluide au mélange obtenu.

7. Utilisation d'une composition de mortier suivant l'une quelconque des revendications 1 à 3 pour son gâchage avec de l'eau en vue de former un mortier, un enduit, un crépi, une chape, un mortier-colle et des produits analogues.

8. Mortiers, enduits, crépis, chapes, mortiers-colles, tels qu'obtenus à l'aide d'une composition de mortier suivant l'une quelconque des revendications 1 à 3 et/ou à l'aide d'une composition préparée suivant l'une quelconque des revendications 4 à 6

## Claims

1. A mortar composition in the form of a dry powder, ready for mixing with water,
comprising at least one powdery mineral binder and at least one aggregate, as well as optionally at least one common additive and/or admixture, and
formed with particles, at least one portion of which, called fine particles, is capable of producing emission of dusts,
the composition further comprising a fluid additive, which consists of at least one apolar hydrocarbon organic substance selected from mineral oils, paraffinic oils, paraffins, polyolefins, or mixtures of these substances, and which has a capacity for agglomerating said fine particles, the dry mortar composition containing agglomerates of fine particles formed by the fluid additive,
**characterized in that**
a) at least one aforesaid powdery mineral binder is hydrated lime, said fluid additive being contained in an amount from 4g to 10g per kg of composition, or
b) no aforesaid powdery mineral binder is hydrated lime, said fluid additive being contained in an amount from 4g to 10g per kg of composition, with the exception of 10g per kg of aliphatic paraffinic or mineral oil.

2. The mortar composition according to claim 1, **characterized in that** the fluid additive is hydrophobic.

3. The mortar composition according to one of claims 1 and 2, **characterized in that** the mineral binders are selected from cements, hydrated lime, gypsum plaster, and mixtures thereof.

4. A method for preparing a mortar composition according to any of claims 1 to 3, **characterized in that** it comprises a mixture of said at least one powdery mineral binder, of said at least one aggregate as well as optionally said at least one common additive and/or admixture and, before this mixing, addition of said fluid additive to at least one constituent of said mixture.

5. A method for preparing a mortar composition according to any of claims 1 to 3, **characterized in that** it comprises a mixture of said at least one powdery mineral binder, of said at least one aggregate as well as optionally said at least one common additive and/or admixture and, during mixing, addition of said fluid additive.

6. A method for preparing a mortar composition according to any of claims 1 to 3, **characterized in that** it comprises a mixture of said at least one powdery mineral binder, of said at least one aggregate as well as optionally said at least one common additive and/or admixture and, after mixing, addition of said fluid additive to the obtained mixture.

7. The use of a mortar composition according to any of claims 1 to 3, for mixing with water in order to form a mortar, a plaster/render, a roughcoat, a screed, an adhesive mortar, and like products.

8. Mortars, plasters/renders, roughcoats, screeds, adhesive mortars, such as obtained with a mortar composition according to any of claims 1 to 3, and/or with a composition prepared according to any of claims 4 to 6.

## Patentansprüche

1. Mörtelzusammensetzung in der Form eines Trockenpulvers, das zum Anrühren mit Wasser bereit ist,
wobei die Mörtelzusammensetzung mindestens ein pulverförmiges mineralisches Bindemittel und mindestens ein Granulat sowie gegebenenfalls mindestens ein übliches Additiv und/oder Zusatzmittel umfasst und
von Partikeln gebildet wird, von denen mindestens ein Teil, der als Feinpartikel bezeichnet wird, zum Bewirken einer Staubemission geeignet ist,
wobei die Zusammensetzung außerdem ein flüssiges Additiv umfasst, das aus mindestens einem apolaren kohlenwasserstoffhaltigen organischen Stoff besteht, der aus Mineralölen, Paraffinölen, Paraffinen, Polyolefinen oder Gemischen dieser Stoffe ausgewählt ist, und das eine Fähigkeit zur Agglomeration der Feinpartikel aufweist, wobei die Mörtelzusammensetzung Agglomerate der Feinpartikel umfasst, die durch das flüssige Additiv gebildet werden,
**dadurch gekennzeichnet, dass**
a) mindestens ein oben genanntes pulverförmiges mineralisches Bindemittel gelöschter Kalk ist, wobei das flüssige Additiv in einer Menge von 4 g bis 10 g pro kg der Zusammensetzung enthalten ist, oder
b) kein oben genanntes pulverförmiges mineralisches Bindemittel gelöschter Kalk ist, wobei das flüssige Additiv in einer Menge von 4 g bis 10 g pro kg der Zusammensetzung enthalten ist, unter Ausschluss von 10 g pro kg des Mineralöls oder aliphatischen Paraffinöls.

2. Mörtelzusammensetzung nach Anspruch 1, **dadurch gekennzeichnet, dass** das flüssige Additiv hydrophob ist.

3. Mörtelzusammensetzung nach einem der Ansprüche 1 und 2, **dadurch gekennzeichnet, dass** die mineralischen Bindemittel aus Zementen, gelöschtem Kalk, Gips und deren Gemischen ausgewählt sind.

4. Verfahren zur Herstellung einer Mörtelzusammensetzung nach einem der Ansprüche 1 bis 3, **dadurch gekennzeichnet, dass** es ein Mischen des mindestens einen pulverförmigen mineralischen Bindemittels, des mindestens einen Granulats sowie gegebenenfalls des mindestens einen üblichen Additivs und/oder Zusatzmittels und vor diesem Mischen eine Zugabe des flüssigen Additivs zu mindestens einem Bestandteil des Gemischs umfasst.

5. Verfahren zur Herstellung einer Mörtelzusammensetzung nach einem der Ansprüche 1 bis 3, **dadurch gekennzeichnet, dass** es ein Mischen des mindestens einen pulverförmigen mineralischen Bindemittels, des mindestens einen Granulats sowie gegebenenfalls des mindestens einen üblichen Additivs und/oder Zusatzmittels und während des Mischens eine Zugabe des flüssigen Additivs umfasst.

6. Verfahren zur Herstellung einer Mörtelzusammensetzung nach einem der Ansprüche 1 bis 3, **dadurch gekennzeichnet, dass** es ein Mischen des mindestens einen pulverförmigen mineralischen Bindemittels, des mindestens einen Granulats sowie gegebenenfalls des mindestens einen üblichen Additivs und/oder Zusatzmittels und nach dem Mischen eine Zugabe des flüssigen Additivs zu dem erhaltenen Gemisch umfasst.

7. Verwendung einer Mörtelzusammensetzung nach einem der Ansprüche 1 bis 3 zu deren Anrühren mit Wasser, um einen Mörtel, eine Spachtelmasse, einen Putz, einen Estrich, einen Klebemörtel und ähnliche Produkte zu bilden.

8. Mörtel, Spachtelmassen, Putze, Estriche, Klebemörtel, wie sie mithilfe einer Mörtelzusammensetzung nach einem der Ansprüche 1 bis 3 und/oder mithilfe einer Zusammensetzung, die nach einem der Ansprüche 4 bis 6 hergestellt wurde, erhalten wurden.
